# FASCICULE DE BREVET EUROPEEN

(11) **EP 0 582 520 B1**
(45) Date de publication et mention de la délivrance du brevet: **02.10.1996**
(21) Numéro de dépôt: 93402007.4
(22) Date de dépôt: 04.08.1993
(51) Int. Cl.: H02G 1/14, B29C 45/14, B29C 45/27

(54) **Machine de surmoulage d'un équipement d'une liaison sous-marine, procédé de miseen oeuvre utilisant la machine et équipement surmoulé en résultant**
Vorrichtung zum Umgiessen einer Anordnung einer elektrischen Unterwasserverbindung, Verfahren unter Verwendung der Vorrichtung und derart umgossene Anordnung
Apparatus for overmoulding an assembly of an electrical underwater connection, process using this apparatus and overmoulded assembly made thereby

(30) Priorité: 07.08.1992 FR 9209835
(43) Date de publication de la demande: 09.02.1994
(73) Titulaire: ALCATEL CABLE, F-92111 Clichy Cédex (FR); INTRON ENGINEERING AG, CH-8050 Zürich-Oerlikon (CH)
(72) Inventeur: Daguet, Bruno, F-62100 Calais (FR); Ganz, Martin, c/o Intron Engineering AG, CH-8050 Zurich-Oerlikon (CH); Libert, Jean-Francois, F-62360 Condette (DE)
(74) Mandataire: Buffiere, Michelle

(56) Documents cités:
- FR-A- 980 000
- US-A- 2 471 683
- US-A- 4 422 841
- US-A- 4 678 866
- US-A- 4 701 117
- PATENT ABSTRACTS OF JAPAN vol. 7, no. 50 (M-197)(1195) 26 Février 1983 & JP-A-57199620

## Description

La présente invention concerne, pour la constitution ou la réparation de liaisons sous-marines, les opérations de surmoulage des boîtes de jonction et des boîtiers de répéteurs équipant ces liaisons. Elle porte plus particulièrement sur une machine de surmoulage de ces équipements d'une liaison sous-marine, sur le procédé de mise en oeuvre, ainsi que sur de tels équipements surmoulés à l'aide de ce dispositif.

De manière connue, une liaison sous-marine est constituée de câbles de ligne, de répéteurs montés en boîtier et équipés de câbles d'accès et de boites de jonction dans lesquelles sont raccordés deux câbles de ligne ou un câble de ligne à un câble d'accès de répéteur. Chaque boîte de jonction, comme chaque boîtier de répéteur, a la forme d'un fût cylindrique prolongé de part et d'autre par des portions terminales coniques. Ces boîtiers de jonction et les boîtiers de répéteurs sont recouverts d'un gainage de polyéthylène, assurant avec le gainage des câbles de ligne et d'accès la continuité de la protection d'étanchéité et d'isolation électrique de la liaison vis-à-vis de l'eau de mer.

Le gainage de ces boîtes et boîtiers est réalisé par surmoulage. Les techniques et les dispositifs utilisés jusqu'à présent réalisent ce surmoulage en des opérations séparées, qui consistent à réaliser préalablement le surmoulage de la partie cylindrique centrale et ultérieurement les surmoulages des portions terminales coniques, en assurant la continuité de part et d'autre de ces portions terminales avec la gaine du câble de ligne ou d'accès concerné et avec le surmoulage central préalable. Ces surmoulages sont obtenus par injections, à basse pression et faible vitesse, du volume requis de polyéthylène dans la cavité d'un moule, pour chacune de ces opérations.

Ces opérations de surmoulage sont longues. Elles donnent lieu à quatre zones d'interface entre le surmoulage central, les deux surmoulages d'extrémité et les gaines également en polyéthylène des câbles de ligne et/ou d'accès concernés. On peut améliorer la protection au niveau des zones d'interface à l'aide de manchons thermorétractables enfilés sur les câbles et le surmoulage central et glissés en place après la réalisation des surmoulages d'extrémité.

Les documents US-A-4 678 866 et FR-A-980 000 décrivent des machines de surmoulage d'un équipement de liaison sous-marine présentant les caractéristiques énoncées dans le préambule de la revencation 1.

La présente invention a pour but de réduire de manière importante la durée d'opération globale de surmoulage de chacun de ces équipements d'une liaison sous-marine, de réduire en conséquence le coût des surmoulages réalisés en usine ou sur bateau, et également de réduire le nombre des zones d'interface obtenues et par là les risques de défauts dans ces zones d'interface.

Elle a pour objet une machine de surmoulage d'un équipement de liaison sous-marine, ledit équipement ayant sensiblement la forme d'un fût cylindrique prolongé de part et d'autre par des parties coniques terminales traversées axialement par deux câbles de la liaison, comportant:
- un moule constitué d'un demi-moule supérieur et d'un demi-moule inférieur, l'un fixé sur un bâti de machine et l'autre mobile et actionnable entre une position d'ouverture et une position de fermeture du moule, recevant ledit équipement et des portions voisines de part et d'autre des deux câbles dans la cavité définie entre eux,
- une presse d'injection à pression du matériau de surmoulage présentant sortie d'injection couplée à la cavité dudit moule à travers ledit demi-moule fixe,
- une chambre longitudinale de distribution couplant ladite sortie d'injection et deux entrées sensiblement latérales d'injection prévues dans ledit demi-moule fixe, et
- des moyens contrôlés de chauffage et de refroidissement dudit moule,
caractérisée en ce que lesdits demi-moules, présentent deux canaux latéraux semi-annulaires formant deux canaux annulaires dans le moule fermé, lesdits canaux latéraux annulaires étant situés entre lesdites entrées latérales et les extrémités de ladite cavité du moule et présentant chacun une ouverture périphérique de communication avec l'entrée latérale correspondante et une ouverture interne de communication avec l'extrémité correspondante de la cavité.

La machine présente en outre au moins l'une des caractéristiques additionnelles suivantes:
- Une fente met en communication chaque canal latéral annulaire et l'extrémité correspondante de la cavité, cette fente étant avantageusement continue et de largeur variable pour uniformiser l'injection de matière dans l'extrémité de la cavité.
- Le moule présente un canal annulaire central formé sur la périphérie de la cavité et ouvert par une fente sur son centre.
- Le moule comporte, le long de la cavité, d'une part des éléments chauffants intégrés dans la masse desdits demi-moules et d'autre part des canaux de refroidissement, et a des moyens auxiliaires de chauffage par convection forcée qui lui sont associées et sont affectés à la fusion des gaines des câbles logées dans les extrémités du moule.

L'invention a également pour objet un procédé de mise en oeuvre utilisant la machine, caractérisé en ce qu'il consiste, successivement:
- à chauffer ledit moule à une température de 130°C environ,
- à placer ledit équipement dans ledit demi-moule inférieur chaud, celui-ci étant en position d'ouverture du moule,
- à chauffer les portions desdits câbles proches desdites parties coniques terminales dudit équipement, jusqu'à fusion des gaines de ces portions de câbles,
- à fermer le moule et bloquer lesdits demi-moules,
- à remplir ladite presse d'injection d'une quantité, sensiblement en excès relativement au surmoulage à réaliser, de polyéthylène plastifié et homogénéisé et à l'injecter à pression élevée, de 200 bars environ, dans ladite chambre, lesdits canaux latéraux annulaires et ladite cavité, et,
- à refroidir ledit moule puis à l'ouvrir.

Elle a aussi pour objet un équipement recouvert d'un surmoulage réalisé à l'aide de la machine, caractérisé en ce que ledit surmoulage est continu de l'un des câbles à l'autre et présente deux bourrelets latéraux sur la périphérie des câbles, de part et d'autre des parties terminales coniques dudit équipement recouvert du surmoulage, et un bourrelet central sur la périphérie dudit surmoulage, ces bourrelets étant éliminables.

Les caractéristiques et avantages de la présente invention ressortiront de la description faite ci-après d'un exemple préférentiel de réalisation illustré dans les dessins ci-annexés. Dans ces dessins:
- la figure 1 est une vue partielle en élévation et en coupe d'une machine de surmoulage selon la présente invention,
- la figure 2 est une vue avant de la machine, pour la position ouverture de son moule,
- la figure 3 est une vue analogue à la figure 2 mais pour la position fermée de son moule,
- la figure 4 est une vue en coupe verticale du moule de la machine,
- la figure 5 est une vue en coupe horizontale, à échelle légèrement agrandie relativement à la figure 1, d'une partie dite d'injection de matière dans la cavité du moule,
- la figure 6 est une vue en coupe horizontale, donnée en regard de la figure 4, d'une partie dite de refoulement du moule,
- la figure 7 représente un équipement surmoulé à l'aide de la machine.

Le dispositif de surmoulage tel qu'illustré et décrit ci-après assure la réalisation d'un surmoulage en polyéthylène sur la longueur d'une boîte de jonction de deux câbles de ligne d'une liaison sous-marine et, simultanément, le raccordement du surmoulage aux portions voisines, de part et d'autre, de ces deux câbles, revêtus de leur gainage en polyéthylène et raccordés dans cette boîte de jonction. Le dispositif réalise donc ce surmoulage en une seule opération. Il est analogue, mais avec un moule adapté, lorsqu'il s'agit de surmouler un boîtier de répéteur équipé de ses deux câbles d'accès raccordés aux circuits du répéteur dans ce boîtier, le surmoulage réalisé se prolongeant de part et d'autre de ce boîtier et venant se raccorder directement aux gaines des câbles d'accès.

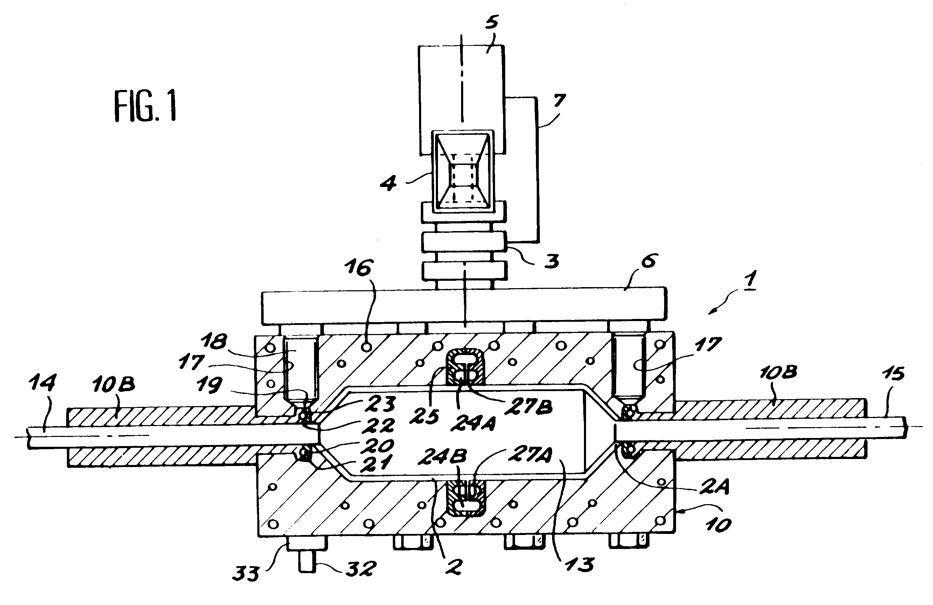

En se référant à la figure 1, on voit que le dispositif comporte un moule 1, en acier, dont la cavité interne 2 est adaptée au surmoulage à réaliser, un dispositif d'injection 3 de polyéthylène à chaud et à haute pression, de l'ordre de 200 bars, dans la cavité 2 du moule, une trémie d'alimentation 4 contenant du polyéthylène sous forme de granulés et alimentant le dispositif d'injection, un dispositif d'actionnement 5 du dispositif d'injection, tel qu'un vérin hydraulique, une chambre longitudinale chauffée 6 de distribution de polyéthylène, couplée à la sortie du dispositif 3 et au moule 1, et un ensemble de commande générale 7 relié aux divers dispositifs et aux éléments équipant le moule, cet ensemble de commande déclenchant et contrôlant les opérations de chacun d'eux.

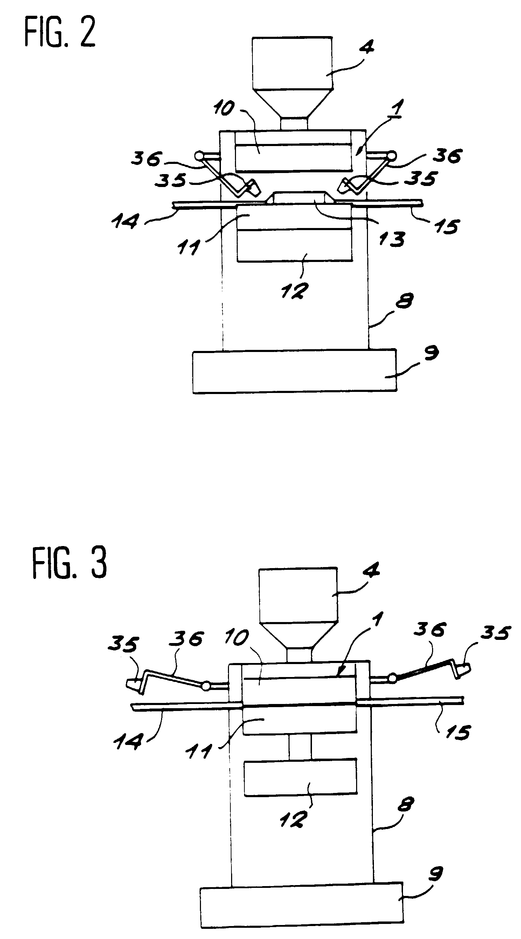

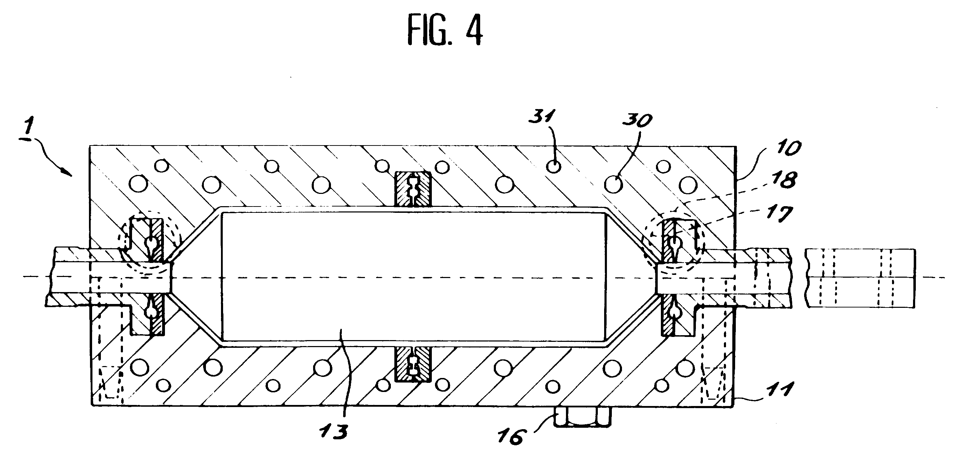

En se référant également aux figures 2 et 3, on voit que la machine est montée sur un bâti 8, d'assise 9 au sol. Le moule 1 est à la partie avant du bâti. Il est globalement constitué de' deux demi-moules, l'un supérieur 10, qui est fixe sur le bâti et couplé à la chambre de distribution 6, et l'autre inférieur 11, qui est mobile sur le bâti en regard du premier. Ce demi-moule inférieur est actionné par son propre dispositif d'actionnement 12, constitué par exemple par un autre vérin hydraulique, entre une position basse d'ouverture du moule (figure 2) est une position haute de fermeture du moule (figure 3). Dans la position basse d'ouverture, il permet la mise en place dans le demi-moule inférieur de la boîte de jonction 13 et des portions voisines de part et d'autre des deux câbles 14 et 15 déjà raccordés dans la boîte de jonction. Dans la position haute de fermeture, la boîte de jonction 13 et les portions voisines des câbles sont enfermées dans le moule, les deux demi-moules étant alors bloqués par un ensemble de vis 16 reçues dans des logements verticaux qu'ils présentent l'un et l'autre, de part et d'autre de la cavité. La figure 4 montre ces deux demi-moules ainsi bloqués.

Le demi-moule supérieur est précisé ci-après en regard de la figure 1, dans laquelle il est seul représenté, et/ou des figures 4 à 6.

Ce demi-moule supérieur 10 présente deux entrées latérales arrière 17, dans les portions terminales de sa partie arrière. Ces entrées 17 sont directement reliées à la chambre de distribution 6 par deux sorties 18 sur celle-ci, qui sont équipées d'une buse d'injection terminale 19 et ainsi bloquées dans ces entrées latérales.

Le demi-moule supérieur 10 est montré constitué par une partie principale 10A équipée desdites entrées latérales 17 et par deux parties d'extrémité 10B dont les extrémités s'encastrent de manière amovible dans celles de la partie principale. Les deux parties d'extrémité 10B sont par ailleurs saillantes sur les bouts de la partie principale. Ce demi-moule peut en variante être en une seule partie.

Les deux parties d'extrémité 10B ont une rainure longitudinale semi-cylindrique adaptée au demi-diamètre du câble gainé que reçoit sans jeu chacune d'elles. Elles assurent la tenue des câbles et de la boîte de jonction dans la cavité 2 du moule, en permettant de laisser, sur la périphérie de la boîte, l'espace nécessaire au surmoulage à réaliser. Leurs extrémités encastrées dans la partie principale 10A sont reçues dans des rainures correspondantes prolongeant axialement la cavité 2. Elles s'étendent sensiblement, mais pas tout à fait, jusqu'aux deux extrémités de la boîte de jonction. Elles définissent les extrémités 2A de la cavité 2, en regard desquelles sont situées les entrées latérales 17.

Deux canaux latéraux d'injection 20, dits internes et de section circulaire sont prévus dans l'extrémité encastrée de chacune des parties 10B de ce demi-moule supérieur 10, autour de la périphérie quasi-immédiate de la portion de chaque câble, qui est proche de la boîte de jonction.

Ces canaux latéraux d'injection semi-annulaires sont définis chacun par une rainure dans la face frontale de l'extrémité encastrée de chaque partie d'extrémité 10B et par une demi-coquille 21 rainurée identiquement et rapportée contre cette face frontale. Ces canaux latéraux d'injection débouchent à travers une fente 22 continue ou non dans l'extrémité 2A de la cavité. Ils ont une ouverture périphérique 23 par laquelle ils communiquent chacun avec l'entrée latérale 17 et ainsi avec l'une des sorties 18 de la chambre 6.

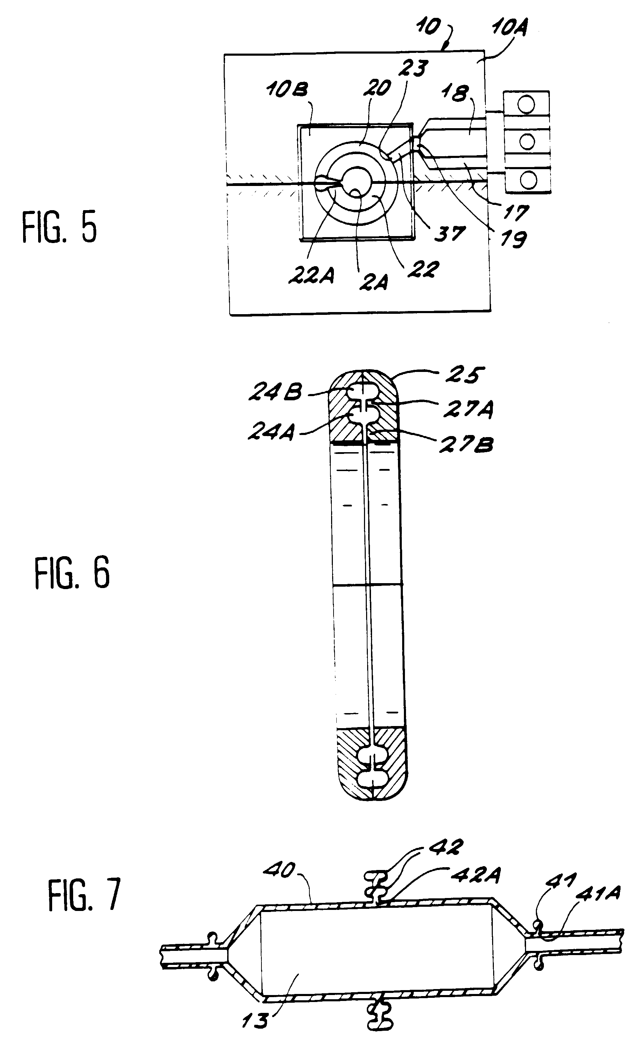

Un double canal 24A, 24B interne et central de refoulement de matière, est prévu dans ce demi-moule supérieur autour de la périphérie quasi immédiate de la portion centrale de la boîte de jonction. Les deux canaux de refoulement 24A et 24B sont semi-annulaires et superposés pour un refoulement à pression de matière dans l'un puis l'autre. Ils sont définis, comme montré dans la figure 6, par deux calottes 25 rainurées identiquement en vis-à-vis et logées dans une rainure correspondante prévue sur la périphérie de la cavité 2, en son centre. Ils communiquent l'un avec l'autre à travers une fente 27A et avec la cavité à travers une fente 27B.

Le demi-moule supérieur 10 comporte également (figure 4) des éléments chauffants 30, noyés dans sa masse, le long de la cavité, et des canaux horizontaux de refroidissement 31 le traversant d'arrière à l'avant, le long de la cavité. Les canaux de refroidissement sont reliés à des conduites avant et arrière 32 d'alimentation et d'évacuation d'eau ou d'un autre fluide de refroidissement analogue. Les conduites avant ou arrière sont équipées de vannes individuelles 33. Les éléments chauffants 30 et les vannes individuelles 33 sont commandées à partir de l'ensemble de commande générale 7.

Le demi-moule inférieur mobile 11 est équipé des mêmes éléments que ceux décrits ci-avant dans le demi-moule supérieur, à l'exception cependant des entrées latérales 17 et de l'ouverture périphérique 23 de chaque canal latéral annulaire d'injection 20, qui sont prévues sur le seul demi-moule supérieur fixe. Le demi-moule inférieur n'est donc plus décrit séparément.

Des dispositions spécifiques supplémentaires sont prévues dans la machine et plus particulièrement dans ou au niveau du moule et sont précisées ci-après en regard des figures concernées.

L'une des ces dispositions est illustrée schématiquement dans les figures 2 et 3. Elle consiste à prévoir des moyens auxiliaires de chauffage des gaines des deux portions de câbles, proches de la boîte de jonction. Ces moyens sont constitués par deux têtes latérales de chauffage par convection 35, montées sur des bras télescopiques 36 fixés sur le bâti 8 de machine.

Ces deux têtes ont été illustrées à l'avant du moule 1 pour les rendre visibles dans ces figures mais peuvent être à l'arrière du moule. Ces têtes et leur positionnement sont contrôlés à partir de l'ensemble de commande générale. Elles sont positionnées à proximité des portions des câbles proches de la boite de jonction et assurent le chauffage et la fusion rapide des gaines de ces portions, alors que le demi-moule bas est encore en position basse d'ouverture du moule. Elles sont escamotées et inactives ensuite. En variante ces moyens, de préférence à convection d'air chaud pulsé, peuvent être réalisés différemment et être directement associés au moule pour assurer cette fonction en étant à canaux obturables d'air pulsé dans le demi-moule inférieur 11 et/ou le demi-moule supérieur 10.

D'autres dispositions spécifiques supplémentaires illustrées dans la figure 5 sont relatives à l'injection de matière dans les canaux annulaires d'injection 20 et de ceux-ci dans les extrémités 2A de la cavité du moule. Elles consistent en deux canaux inclinés 37 prévus dans le demi-moule supérieur 10, chacun entre le niveau haut de chaque buse terminale 19 sur la sortie 18 de la chambre 6 et le niveau bas de l'ouverture périphérique 23 de chaque canal annulaire 20. Elles consistent en outre dans les fentes 22 de mise en communication des canaux annulaires 20 avec les extrémités de la cavité, qui sont prévues de largeur non uniforme le long de la périphérie de chacune des extrémités de la cavité. Cette largeur est moindre sur ses parties en regard et de part et d'autre de l'ouverture périphérique 23, dans laquelle débouche le canal incliné 37, et est maximale, tout en restant toujours relativement étroite dans sa partie 22A située sensiblement à l'opposé de cette ouverture périphérique 23, pour l'uniformisation de l'injection de matière sur toute la périphérie de chaque extrémité 2A de la cavité.

Le système de presse d'injection avec son dispositif d'actionnement est de type globalement connu dans l'industrie des matières plastiques. Il n'est donc pas représenté et pas décrit en détail dans cette machine de surmoulage.On indique simplement qu'il est à vis rotative et mobile en translation, assurant la plastification des granulés de polyéthylène pris de la trémie, puis chauffés, fondus et homogénéisés et permettant l'injection sous pression de la quantité nécessaire stockée de polyéthylène dans la chambre de distribution et par là dans le moule et le maintien de cette pression d'injection lors du refroidissement du moule.

La figure 8 représente la boîte de jonction 13 précitée munie du surmoulage 40 réalisé par la machine. Ce surmoulage au sortir de la machine comporte deux bourrelets annulaires 41 de part et d'autre de la boîte de jonction surmoulée et un bourrelet annulaire 42 sur sa zone périphérique centrale, qui correspondent aux deux canaux annulaires d'injection et au double canal annulaire de refoulement de la machine. Ces bourrelets 41 et 42 présentent chacune une fine attache continue de liaison 41A, 42A au surmoulage 40, qui sont éliminés aisément, en particulier en les sciant puis sont poncés.

Le fonctionnement de la machine est expliqué ci-après. Il est organisé en une suite de séquences pouvant se chevaucher, qui sont déclenchées et arrêtées par l'ensemble de commande générale. Ces séquences sont les suivantes:
- Dans une séquence initiale, exécutée en temps masqué, le moule ouvert est chauffé pour être porté à une température de 130°C environ, la boîte étant à l'issue de cette séquence initiale placée dans le moule ouvert et maintenu à cette température chaude.
- Dans une première séquence opératoire, le polyéthylène des gaines des câbles est chauffé, dans les seules portions de ces gaines proches de la boîte, et ceci jusqu'à sa fusion. Cette séquence est de courte durée, de l'ordre de 8 minutes au bout de laquelle le moule est fermé.
- Dans une deuxième séquence, la presse d'injection est remplie de la quantité choisie en léger excès de polyéthylène, qui y est plastifié et homogénéisé puis alors injecté à forte pression dans la cavité du moule par ses deux extrémités. Le polyéthylène injecté par intrusion (rotation de la vis d'injection de la presse) dans les deux extrémités du moule remplit alors le moule, vient se souder au centre et est refoulé à pression dans les canaux superposés du double canal de refoulement. Le remplissage du moule est réalisé en une durée de 1 minute environ. Le chauffage du moule est dès lors coupé, mais la pression d'injection reste maintenue par la poussée exercée sur la vis d'injection par son vérin d'actionnement.
- Dans une troisième séquence, le moule est refroidi en commençant tout d'abord par la zone centrale du moule puis en allant vers ses extrémités, à l'aide d'une circulation forcée d'eau dans ses canaux individuels de refroidissement et les conduites extérieures dont les vannes sont ouvertes successivement. Cette séquence est de durée d'une dizaine de minutes. La pression d'injection est maintenue pendant la moitié de cette séquence environ.

Le moule est alors ouvert, pour le retrait de la boîte de jonction ainsi surmoulée. La durée globale du surmoulage depuis la première séquence est de l'ordre de 25 minutes, ceci en incluant les temps nécessaires de montage en place des coquilles et calottes dans les demi-moules, pour définir les canaux annulaires d'injection et de refoulement, et de blocage des deux demi-moules. Ce surmoulage est exécuté en une seule opération sur toute la boîte. Il ne nécessite qu'une température chaude du moule restant relativement basse. On précise comparativement que les techniques antérieures de surmoulage des seules extrémités de la boîte de jonction demandaient une durée de l'ordre de 3 heures.

En regard des trois séquences principales indiquées ci-avant, on note que la première séquence peut comporter une sous-séquence supplémentaire de vidange de la presse, de la chambre de distribution et de canaux du moule, en particulier après une interruption de longue durée de fonctionnement de la machine. Cette sous séquence de vidange est exécutée après chauffage du moule et avant mise en place de la boîte de jonction dans ce moule. Elle permet de recueillir et d'éliminer le polyéthylène restant dans la chambre et certains des canaux du moule depuis la dernière opération de surmoulage.

On note en outre, que le canal de refoulement permet de recueillir dans le bourrelet central du surmoulage de la boîte les éventuelles salissures de surface de la boîte et ainsi de les éliminer du surmoulage final, ce bourrelet central correspondant au polyéthylène, qui a balayé la boîte et est refoulé dans le canal de refoulement, et étant éliminé ultérieurement.

Cette machine a été décrite en regard de l'exemple de réalisation illustré. Il est évident que l'on peut y apporter des modifications sans pour autant sortir du cadre de cette invention. Notamment, la réalisation des canaux du moule est adaptée selon que les deux demi-moules sont en une seule pièce ou plusieurs. Les moyens de chauffage du moule et des gaines des câbles et de refroidissement du moule peuvent également être réalisés et montés de manière différente, en restant équivalents aux moyens décrits. Le canal central de refoulement peut également être simple et non pas double, le double canal permettant d'augmenter le volume global en conservant l'action de refoulement en pression de matière dans celui-ci. Les parties d'extrémité des demi-moules peuvent également être refroidies, en y prévoyant deux canaux longitudinaux dans chacune d'elles.

## Revendications

1. Machine de surmoulage d'un équipement (13) de liaison sous-marine, ledit équipement (13) ayant sensiblement la forme d'un fût cylindrique prolongé de part et d'autre par des parties coniques terminales traversées axialement par deux câbles (14,15) de la liaison, comportant:
- un moule (1) constitué d'un demi-moule supérieur (10) et d'un demi-moule inférieur (11), l'un (10) fixé sur un bâti (8) de machine et l'autre (11) mobile et actionnable entre une position d'ouverture et une position de fermeture du moule, recevant ledit équipement (13) et des portions voisines de part et d'autre des deux câbles (14, 15) dans la cavité (2) définie entre eux,
- une presse d'injection (3) à pression du matériau de surmoulage présentant sortie d'injection (18) couplée à la cavité (2) dudit moule (1) à travers ledit demi-moule fixe (10),
- une chambre longitudinale de distribution (6) couplant ladite sortie d'injection (18) et deux entrées sensiblement latérales (17) d'injection prévues dans ledit demi-moule fixe (10), et
- des moyens contrôlés de chauffage (30,35) et de refroidissement (31) dudit moule (1),
caractérisée en ce que lesdits demi-moules (10, 11) présentent deux canaux latéraux semi-annulaires (20) formant deux canaux annulaires dans le moule fermé, lesdits canaux latéraux annulaires (20) étant situés entre lesdites entrées latérales (17) et les extrémités de ladite cavité du moule et présentant chacun une ouverture périphérique (23) de communication avec l'entrée latérale correspondante (17) et une ouverture interne (22) de communication avec l'extrémité correspondante (2A) de la cavité.

2. Machine selon la revendication 1, caractérisée en ce que ladite ouverture interne (22) est constituée par une fente étroite sur la périphérie de l'extrémité de la cavité.

3. Machine selon la revendication 2, caractérisée en ce que ladite fente est de largeur variable, de valeur minimale en regard de ladite ouverture périphérique (23) et de valeur maximale dans une zone (22A) sensiblement opposée.

4. Machine selon l'une des revendications 1 à 3, caractérisée en ce que chaque canal latéral annulaire (20) est défini par au moins une pièce rainurée (21), rapportée dans la face interne délimitant la cavité de chaque demi-moule (10, 11).

5. Machine selon l'une des revendications 1 à 4, caractérisée en ce que lesdites extrémités (2A) de la cavité (2) dudit moule sont équipées d'une pièce terminale (10B) et d'une demi-coquille quasi-terminale (21), toutes deux cylindriques, ayant un diamètre intérieur adapté au diamètre des câbles gainés et ayant des faces frontales rainurées en vis-à-vis en définissant entre elles l'un desdits canaux latéraux annulaires (20).

6. Machine selon l'une des revendication 1 à 5, caractérisée en ce que lesdits demi-moules (10, 11) présentent en outre un canal central semi-annulaire de refoulement (24) formant un canal central annulaire continu lors de la fermeture du moule et ouvert sur la périphérie de la cavité, en son centre.

7. Machine selon la revendication 6, caractérisée en ce que ledit canal annulaire central est défini par des calottes (25) rainurées en vis-à-vis et rapportées dans la face interne délimitant la cavité du moule.

8. Machine selon l'une des revendications 1 à 7, caractérisée en ce que ladite chambre de distribution (6) présente deux sorties (18), à buse terminale d'injection (19), bloquées dans lesdites entrées latérales (17) dudit demi-moule fixe (10).

9. Machine selon l'une des revendications 1 à 8, caractérisée en ce que ledit demi-moule fixe (10) présente en outre deux canaux inclinés (37) couplant chacun l'une desdites entrées latérales (17) et l'ouverture périphérique (23) du canal latéral annulaire correspondant (20).

10. Machine selon l'une des revendications 2 à 9, caractérisée en ce que lesdits moyens de chauffage et de refroidissement du moule comportent des éléments chauffants (30) intégrés dans lesdits demi-moules, le long de ladite cavité, des canaux de refroidissement (31), prévus le long de ladite cavité et couplés à des conduites extérieures (32) d'alimentation et d'évacuation en fluide de refroidissement équipées de vannes commandées (33), et des moyens auxiliaires de chauffage (35) en regard desdites extrémités (2A) de ladite cavité.

11. Machine selon la revendication 10, caractérisée en ce que lesdits moyens auxiliaires de chauffage (35) sont constitués par deux têtes de convection forcée de gaz chaud, montées chacune sur un support télescopique (36) fixé au bâti de machine et actionnées entre une position active, pour laquelle elles sont sensiblement entre ledit demi-moule fixe et ledit demi-moule mobile alors en position d'ouverture du moule, et une position escamotée, pour laquelle elles sont distantes dudit moule.

12. Machine selon la revendication 10, caractérisée en ce que lesdits moyens auxiliaires de chauffage (35) sont constitués par des têtes de convection forcée de gaz chaud couplées à des canaux d'extrémité prévus dans au moins l'un desdits demi-moules fixe (10) et mobile (11) et débouchant dans les extrémités (2A) de ladite cavité.

13. Procédé de mise en oeuvre utilisant la machine selon l'une des revendications 10 à 12, caractérisé en ce qu'il consiste, successivement:
- à chauffer ledit moule à une température de 130°C environ,
- à placer ledit équipement (13) dans ledit demi-moule inférieur chaud, celui-ci étant en position d'ouverture du moule,
- à chauffer les portions desdits câbles proches desdites parties coniques terminales dudit équipement, jusqu'à fusion sensiblement des gaines sur ces portions de câble,
- à fermer le moule et bloquer lesdits demi-moules,
- à remplir ladite presse d'injection d'une quantité, sensiblement en excès relativement au surmoulage à réaliser, de polyéthylène plastifié et homogénéisé et à l'injecter à pression élevée, de 200 bars environ, dans ladite chambre, lesdits canaux latéraux annulaires et ladite cavité, et,
- à refroidir ledit moule puis à l'ouvrir.

14. Procédé selon la revendication 13, caractérisé en ce que le refroidissement dudit moule est exécuté en premier lieu dans la seule partie centrale du moule puis également de part et d'autre de cette partie centrale.

15. Procédé selon l'une des revendications 13 et 14, caractérisé en ce que les opérations successives sont exécutées en des séquences déclenchées et contrôlées en durée par un ensemble de commande générale.

16. Equipement recouvert d'un surmoulage réalisé à l'aide de la machine selon l'une des revendications 1 à 12, caractérisé en ce que ledit surmoulage (40) est continu de l'un des câbles à l'autre (14, 15) et présente deux bourrelets latéraux (41) sur la périphérie des câbles, de part et d'autre des parties terminales coniques dudit équipement recouvert du surmoulage, et un bourrelet central (42) sur la périphérie dudit surmoulage, ces bourrelets étant éliminables.

## Patentansprüche

1. Maschine zum Umgießen einer Einrichtung (13) eines Seekabels, die im wesentlichen die Form eines zylindrischen Fasses und von konischen Endbereichen zu beiden Seiten des Fasses aufweist, durch die axial zwei Anschlußkabel (14, 15) verlaufen,
- mit einer aus einer oberen Halbform (10) und einer unteren Halbform (11) gebildeten Gießform (1), wobei eine Halbform (10) auf einem Sockel (8) der Maschine befestigt ist und die andere (11) zwischen einer offenen und einer geschlossenen Lage der Form beweglich und verschiebbar ist und wobei die Einrichtung (13) und zu beiden Seiten anschließende Bereiche der beiden Kabel (14, 15) in den zwischen den Halbformen definierten Hohlraum (2) eingesetzt werden,
- mit einer Injektionspresse (3), die das Gießmaterial unter Druck setzt und einen an den Hohlraum (2) der Gießform (1) über die ortsfeste Halbform (10) gekoppelten Injektionsausgang (18) besitzt,
- mit einer länglichen Verteilkammer (6), die den Injektionsausgang (18) und zwei im wesentlichen seitliche Eingänge (17) zur Injektion des Gießmaterials in die ortsfeste Halbform (10) koppelt,
- und mit gesteuerten Heizmitteln (30, 35) und Kühlmitteln (31) für die Gießform (1),
dadurch gekennzeichnet, daß die Halbformen (10, 11) zwei seitliche halbringförmige Kanäle (20) besitzen, die zwei Ringkanäle in der geschlossenen Gießform bilden, wobei die seitlichen Ringkanäle (20) zwischen den seitlichen Eingängen (17) und den Enden des Hohlraums der Gießform liegen und je eine periphere Öffnung (23) zur Verbindung mit dem entsprechenden seitlichen Eingang (17) und eine innere Öffnung (22) zur Verbindung mit dem entsprechenden Ende (2A) des Hohlraums aufweisen.

2. Maschine nach Anspruch 1, dadurch gekennzeichnet, daß die innere Öffnung (22) aus einem schmalen Schlitz an der Peripherie des Endes des Hohlraums besteht.

3. Maschine nach Anspruch 2, dadurch gekennzeichnet, daß der Schlitz eine variable Breite hat, wobei die geringste Breite an der peripheren Öffnung (23) und die größte Breite in einer im wesentlichen entgegengesetzten Zone (22A) vorliegt.

4. Maschine nach einem der Ansprüche 1 bis 3, dadurch gekennzeichnet, daß jeder seitliche Ringkanal (20) durch mindestens ein mit Rillen versehenes Teil (21) definiert ist, das in die den Hohlraum jeder Halbform (10, 11) begrenzende Innenseite eingefügt ist.

5. Maschine nach einem der Ansprüche 1 bis 4, dadurch gekennzeichnet, daß die Enden (2A) des Hohlraums (2) der Form ein Endteil (10B) und eine praktisch am Ende liegende Halbschale (21) besitzen, die beide zylindrisch sind und deren Innendurchmesser an den Durchmesser der umhüllten Kabel angepaßt ist und deren gerillte, einander gegenüberliegende Stirnseiten zwischen sich einen der seitlichen Ringkanäle (20) definieren.

6. Maschine nach einem der Ansprüche 1 bis 5, dadurch gekennzeichnet, daß die Halbformen (10, 11) außerdem einen zentralen, halbringförmigen Auslaßkanal (24) besitzen, der beim Schließen der Form einen kontinuierlichen zentralen Ringkanal bildet und an der Peripherie des Hohlraums in dessen Zentrum in diesen mündet.

7. Maschine nach Anspruch 6, dadurch gekennzeichnet, daß der zentrale Ringkanal durch einander gegenüberliegende, mit Rillen versehene Kalotten (25) definiert ist, die in die den Hohlraum der Form begrenzende Innenseite eingefügt sind.

8. Maschine nach einem der Ansprüche 1 bis 7, dadurch gekennzeichnet, daß die Verteilkammer (6) zwei Ausgänge (18) mit einer Injektionsdüse (19) am Ende besitzt, die in den seitlichen Eingängen (17) der ortsfesten Halbform (10) blockiert sind.

9. Maschine nach einem der Ansprüche 1 bis 8, dadurch gekennzeichnet, daß die ortsfeste Halbform (10) außerdem zwei geneigte Kanäle (37) aufweist, die je einen der seitlichen Eingänge (17) mit der peripheren Öffnung (23) des entsprechenden seitlichen Ringkanals (20) koppeln.

10. Maschine nach einem der Ansprüche 2 bis 9, dadurch gekennzeichnet, daß die Mittel zum Erwärmen und Abkühlen der Form Heizelemente (30), die in die Halbformen entlang des Hohlraums integriert sind, Kühlkanäle (31), die entlang des Hohlraums verlaufen und an äußere Zu- und Abfuhrleitungen für ein Kühlfluid mit gesteuerten Ventilen (33) gekoppelt sind, und Hilfsheizmittel (35) aufweisen, die an den Enden (2A) des Hohlraums liegen.

11. Maschine nach Anspruch 10, dadurch gekennzeichnet, daß die Hilfsheizmittel (35) von zwei Konvektionsheizköpfen gebildet werden, die Heißgasstrahlen erzeugen und je auf einem am Sockel der Maschine befestigten Teleskopträger (36) montiert sind und zwischen einer aktiven Stellung, in der sie im wesentlichen zwischen den beiden geöffneten Halbformen der Gießform liegen, und einer Ruhestellung bewegt werden, in der sie von der Gießform entfernt sind.

12. Maschine nach Anspruch 10, dadurch gekennzeichnet, daß die Hilfsheizmittel (35) aus Konvektionsheizköpfen gebildet werden, die einen Heißgasstrahl erzeugen und an in mindestens einer der beiden Halbformen (10, 11) vorgesehene Endkanäle gekoppelt sind, die in die Enden (2A) des Hohlraums münden.

13. Verfahren zur Verwendung der Maschine nach einem der Ansprüche 10 bis 12, dadurch gekennzeichnet, daß nacheinander folgende Schritte durchgeführt werden:
- die Form wird auf eine Temperatur von etwa 130°C erwärmt;
- die Einrichtung (13) wird in die heiße untere Halbform eingelegt, wenn diese sich in der offenen Stellung befindet;
- die Bereiche der Kabel in der Nähe der konischen Endbereiche der Einrichtung werden bis im wesentlichen zum Schmelzen der Hüllen dieser Kabelbereiche erwärmt;
- die Form wird geschlossen und die Halbformen werden blokkiert;
- die Injektionspresse wird mit einer knapp über der für das Umgießen erforderlichen Menge von plastifiziertem und homogenisiertem Polyäthylen gefüllt, und dieses Material wird unter hohem Druck von etwa 200 Bar in die Kammer, die seitlichen Ringkanäle und den Hohlraum injiziert;
- man läßt die Form abkühlen und öffnet sie dann.

14. Verfahren nach Anspruch 13, dadurch gekennzeichnet, daß das Abkühlen der Form zuerst nur im zentralen Bereich der Form und dann auch zu beiden Seiten dieses zentralen Bereichs erfolgt.

15. Verfahren nach einem der Ansprüche 13 und 14, dadurch gekennzeichnet, daß die aufeinanderfolgenden Schritte von einer allgemeinen Steuereinheit ausgelöst und zeitlich kontrolliert werden.

16. Einrichtung, die eine mit Hilfe der Maschine nach einem der Ansprüche 1 bis 12 hergestellte Schutzschicht trägt, dadurch gekennzeichnet, daß die Schutzschicht (40) kontinuierlich von einem der Kabel (14) zum anderen (15) verläuft und zwei seitliche Wulste (41) an der Peripherie des Kabels zu beiden Seiten des konischen Endbereichs der umhüllten Einrichtung sowie einen zentralen Wulst (42) an der Peripherie dieser Schutzschicht besitzt, wobei diese Wulste entfernt werden können.

## Claims

1. Machine for overmoulding an underwater cable equipment (13), said equipment (13) being substantially cylindrical in shape with conical end parts at each end through which two connecting cables (14, 15) pass axially, comprising:
- a mould (1) comprising an upper half-mould (10) and a lower half-mould (11), one (10) fixed to a machine frame (8) and the other (11) mobile and adapted to be actuated between an open position and a closed position of the mould, receiving in the cavity (2) defined between them said equipment (13) and adjoining portions on either side thereof of the two cables (14, 15),
- a press (3) for injecting the overmoulding material under pressure having an injector outlet (18) coupled to the cavity (2) of said mould (1) via said fixed half-mould (10),
- a longitudinal distribution chamber (6) coupling said injector outlet (18) and two side injector inlets (17) in said fixed half-mould (10), and
- means for controlled heating (30, 35) and cooling (31) of said mould (1),
characterised in that said half-moulds (10, 11) have two semi-annular side passages (20) forming two annular passages in the closed mould, said lateral annular passages (20) being disposed between said side inlets (17) and the ends of said mould cavity and each having an external opening (23) by which it communicates with the respective side inlet (17) and an internal opening (22) by which it communicates with the respective end (2A) of the cavity.

2. Machine according to claim 1 characterised in that said internal opening (22) is a narrow slot at the periphery of the end of the cavity.

3. Machine according to claim 2 characterised in that said slot is of varying width, having a minimal width facing said peripheral opening (23) and a maximal width in a substantially opposite area (22A).

4. Machine according to any one of claims 1 to 3 characterised in that each annular side passage (20) is defined by at least one grooved member (21) attached to the inside surface delimiting the cavity of each half-mould (10, 11).

5. Machine according to any one of claims 1 to 4 characterised in that said ends (2A) of said mould cavity (2) are equipped with an end part (10B) and a quasi-terminal half-shell (21), both cylindrical, having an inside diameter matched to the diameter of the jacketed cables and grooved facing front surfaces defining between them one of said annular side passages (20).

6. Machine according to any one of claims 1 to 5 characterised in that said half-moulds (10, 11) each comprise a semi-annular central outlet passage (24) together forming when the mould is closed a continuous annular central passage opening to the exterior of the cavity at its centre.

7. Machine according to claim 6 characterised in that said central annular passage is defined by facing grooved domes (25) attached to the internal surface delimiting the mould cavity.

8. Machine according to any one of claims 1 to 7 characterised in that said distribution chamber (6) has two outlets (18) ending at an injector nozzle (19) and locked in said side inlets (17) of said fixed half-mould (10).

9. Machine according to any one of claims 1 to 8 characterised in that said fixed half-mould (10) further comprises two inclined passages (37) each coupling one of said side inlets (17) and the external opening (23) of the respective annular side passage (20).

10. Machine according to any one of claims 2 to 9 characterised in that said mould heating and cooling means comprise heating elements (30) integrated into said half-moulds lengthwise of said cavity, cooling passages (31) provided lengthwise of said cavity and coupled to external cooling fluid feed and evacuation pipes (32) equipped with selectively operable valves (33), and auxiliary heating means (35) facing said ends (2A) of said cavity.

11. Machine according to claim 10 characterised in that said auxiliary heating means (35) comprise two hot gas forced convection heads each mounted on a telescopic support (36) fixed to the machine frame and actuated between an active position in which they are substantially disposed between said fixed half-mould and said mobile half-mould in the open position of the mould and a retracted position in which they are separated from said mould.

12. Machine according to claim 10 characterised in that said auxiliary heating means (35) comprise hot gas forced convection heads coupled to end passages provided in at least one of said fixed and mobile half-moulds (10, 11) and discharging into the ends (2A) of said cavity.

13. Method of using the machine according to any one of claims 10 to 12 characterised in that it comprises the following successive steps:
- heating said mould to a temperature of approximately 130°C,
- placing said equipment (13) in said heated lower half-mould in the mould's open position,
- heating the portions of said cables near said conical end parts of said equipment until the jacket on said cable portions is substantially melted,
- closing said mould and locking said half-moulds together,
- filling said injection moulding press with a substantially excess quantity relative to the overmoulding to be formed of plasticised and homogenised polyethylene and injecting it into said chamber, said annular side passages and said cavity at a high pressure of approximately 200 bars, and
- cooling and then opening said mould.

14. Method according to claim 13 characterised in that only the central part of said mould is cooled initially and the parts to either side of said central part are cooled thereafter.

15. Method according to claim 13 or claim 14 characterised in that the successive operations are carried out in sequences started and controlled in duration by a main control unit.

16. Equipment covered with an overmoulding applied by the machine according to any one of claims 1 to 12 characterised in that said overmoulding (40) is continuous from one of said cables (14, 15) to the other and includes two side beads (41) on the outside of the cables, one on each side of the conical ends of said equipment covered with the overmoulding, and a central bead (42) on the outside of said overmoulding, said beads being removable.
